Europäisches Patentamt

European Patent Office

Office européen des brevets

(19)

(11)  **EP 1 482 483 A2**

## (12)  EUROPEAN PATENT APPLICATION

(43) Date of publication:
**01.12.2004 Bulletin 2004/49**

(51) Int Cl.⁷: $G10L\ 21/04$

(21) Application number: **04253085.7**

(22) Date of filing: **26.05.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **27.05.2003 JP 2003149034**

(71) Applicant: **Kabushiki Kaisha Toshiba
Tokyo 105-8001 (JP)**

(72) Inventors:
• **Nagayasu, Katsuyoshi
  Kanagawa (JP)**
• **Koichi, Yamamoto
  Nakahara-ku Kawasaki-shi Kanagawa (JP)**

(74) Representative: **Maury, Richard Philip
  MARKS & CLERK,
  57-60 Lincoln's Inn Fields
  London WC2A 3LS (GB)**

(54)  **Speech rate conversion apparatus, method and program thereof**

(57)    A speech rate conversion apparatus including a pitch period calculation unit configured to calculate a pitch period from a speech signal inputted, and an expansion processing unit configured to perform expansion processing by cutting a speech waveform out of the speech signal by the pitch period and inserting an inverted waveform into the speech signal. Preferably, the inverted waveform is obtained by time-reversing the speech waveform.

## FIG. 1

**Description**

Cross Reference to Related Application

This application is based upon and claims the benefit of priority from the prior Japanese Patent Application No. JP2003-149034 field on May 27, 2003; The entire contents of which are incorporated herein by reference.

BACKGROUND OF THE INVENTION

Field of the Invention

The present invention relates to a speech rate conversion apparatus for changing a speech rate of a speech signal.

Background Art

As a general technique for making rate conversion of speech inputted, a waveform processing method of compression and expansion on the time axis of speech by PICOLA (Pointer Interval Control OverLap and Add) is known (see, for example, "Compression and Expansion on Time Axis of Speech Using Pointer Interval Control OverLap. and Add (PICOLA) Method and its Evaluation", Naotaka Morita and Fumitada Itakura, Discourse Collected Papers of Acoustical Society of Japan, October, 1986, 1-4-14, p.149-150).

In this speech rate conversion, speech data inputted is cut out in a certain frame length and a pitch period in a frame is obtained using an autocorrelation function etc. and compression and expansion processing is performed.

However, in this method, when there is near-random sound such as babble of crowds or sound of the waves as background sound other than the speech in the expansion processing, horrible parasitic sound (probably a kind of musical noise) corresponding to a period of waveform insertion is generated extra.

On the other hand, as a method in which the horrible parasitic sound described above is not emitted, a method for randomizing and superimposing phases is known (see, for example, Japan Patent Application KOKAI No. 5-108095, (Paragraph 0015, Fig. 1)).

However, also in this method, complicated processing in which phases are randomized and further the generated randomized phase speech segment waveforms are added or superimposed while shifting the waveforms was required, and it is difficult to package this method in a processing system in which real time processing is required, since a load of throughput is large.

As described above, in the conventional art of the speech rate conversion, there was a problem that horrible sound corresponding to a period of waveform insertion is generated extra when there is near-random sound as background sound.

Also, as a solution for this problem, a method in which phases are randomized and further the generated randomizedphase speech segment waveforms are added or superimposed while shifting the waveforms was known, but there was a problem that complicated processing is required and it is difficult to package this method in a processing system in which real time processing is required, since a load of throughput is large.

SUMMARY OF THE INVENTION

Therefore, the invention is performed in view of the problems as described above, and an object of the invention is to implement a speech rate conversion apparatus with good sound quality by relatively simple processing while horrible parasitic sound is not generated even in speech rate conversion of the case that there is near-random sound as background sound.

In order to achieve the object, the invention is characterized by including a pitch period calculation unit configured to calculate a pitch period from a speech signal inputted, and an expansion processing unit configured to perform expansion processing by cutting a speech waveform out of the speech signal by the pitch period and inserting an inverted waveform in which time axis inversion of the speech waveform is performed into the speech signal.

As a result of this, speech rate conversion with good sound quality without generating horrible parasitic sound can be implemented relatively simply.

BRIEF DESCRIPTION OF THE DRAWINGS

The present invention may be more readily described with reference to the accompanying drawings:

Fig. 1 is a block diagram showing a configuration of a speech rate conversion apparatus in an embodiment of the invention;
Fig. 2 is an explanatory diagram explaining the contents in which waveforms are cut out of a speech signal by a pitch period;
Fig. 3 is an explanatory diagram explaining the contents in which time axis inversion of a speech waveform cut out is performed;
Fig. 4 is an explanatory diagram explaining the contents in which a speech waveform is multiplied by a weighting coefficient;
Fig. 5 is an explanatory diagram explaining the contents in which a waveform weighted is added;
Fig. 6 is an explanatory diagram explaining combination of a speech waveform inserted;
Fig. 7 is an explanatory diagram explaining expansion processing by inserting a speech waveform combined; and
Fig. 8 is a flowchart showing a flowof expansion processing of the embodiment of the invention.

DETAILED DESCRIPTION OF THE PREFERRED EMBODIMENTS

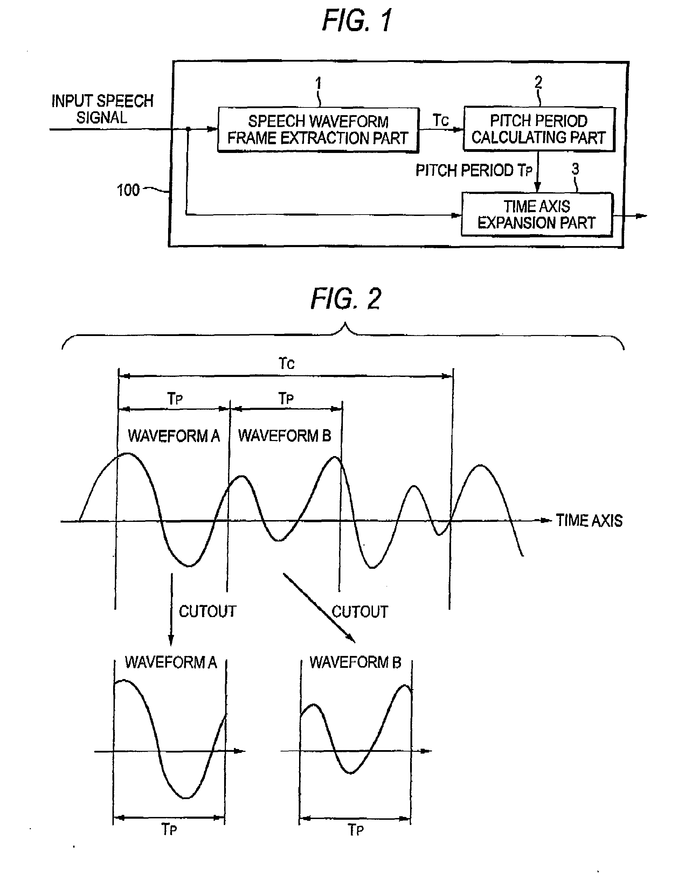

An embodiment of the invention will be described below using the drawings. Fig. 1 is a block diagram showing a configuration of a speech rate conversion apparatus in the present embodiment.

The speech rate conversion apparatus 100 includes a speech waveform frame extraction part 1, a pitch period calculation part 2 and a time axis expansion part 3. The speech waveform frame extraction part 1 cuts a speech waveform of a predetermined frame length out of an input speech signal in order to obtain a pitch period. The pitch period calculation part 2 calculates a pitch period Tp from a speech signal cut out in the speech waveform frame extraction part 1, and inputs this pitch period Tp to the time axis expansion part 3.

Here, a method for calculating a pitch period using an autocorrelation function will be described as a calculation method of a pitch period. In the calculation method of the pitch period using the autocorrelation function, autocorrelation is obtained assuming that an input speech signal has a finite time length and is present within only an interval (corresponding to the frame length described above) of a frame length Tc and the signal is always zero beyond the interval of the frame length Tc. Such a short-time autocorrelation value Rn(k) is obtained as shown by a mathematical formula 1.

[Mathematical formula 1]

$$Rn = \sum_{m=0}^{T_c-1-k} x(n+m) \cdot x(n+m+k)$$

where m = 0, 1, 2, ..., Tc-l-k

Tc is a time interval assumed that the input speech signal is present, and k is delay time of the case of delaying a speech waveform when the short-time autocorrelation value Rn(k) is calculated, and there is a relation of Tc>>k. Then, when a value of k is obtained in the mathematical formula 1 so that the short-time autocorrelation value Rn(k) is maximized, its value becomes a pitch period. The pitch period Tp obtained is sent to the time axis expansion part 3. In the time axis expansion part 3, expansion processing is performed as described below.

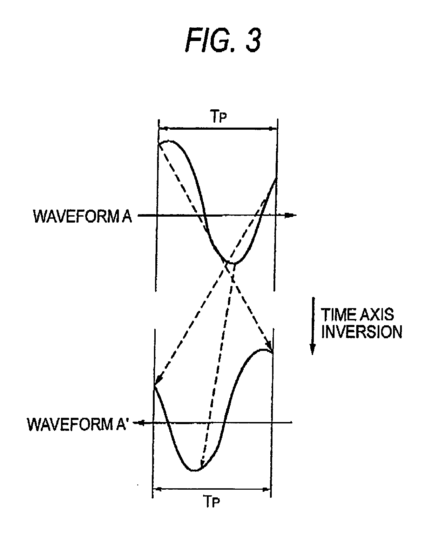

In the expansion processing, as shown in Fig. 2, when it is assumed that a pitch period calculated by the pitch period calculation part 2 is Tp and an expansion coefficient is R (for example, 1<R≦2) and a speech waveform cut out of a frame length extraction part is Tc=Tp/(R-l), plural speech waveforms are first cut out by the pitch period. Here, two speech waveforms of a waveform A and a waveform B in succession are simply cut out as they are. Thereafter, as shown in Fig. 3, the speech waveform of the waveform A cut out is converted into a waveform A' by time axis inversion.

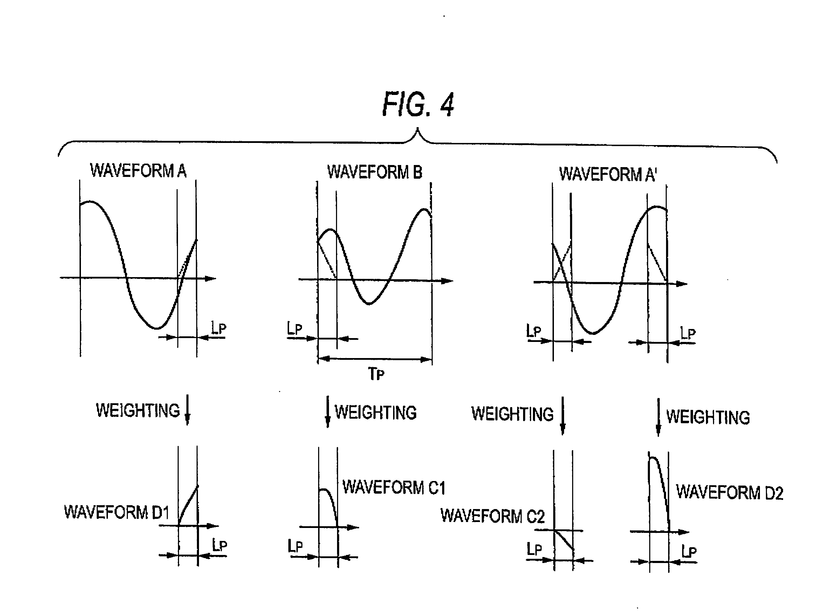

As shown in Fig. 4, the waveform A from a point of contact with the waveform B (the terminal end of the waveform A) to an Lp portion is multiplied by weighting from 0 to 1 and a speech waveform of a waveform D1 is created. The Lp is a predetermined time length and is shorter than the pitch period Tp and is approximately Lp=1/5 to 1/6 Tp. Similarly, the waveform B from a point of contact with the waveform A (the initial end of the waveform B) to an Lp portion, the waveform A' from the initial end to an Lp portion and the waveform A' from the terminal end to an Lp portion are multiplied by weighting coefficients linearly changing from 1 to 0, from 0 to 1 and from 1 to 0, respectively and speech waveforms of a waveform C1, a waveform C2 and a waveform D2 are created.

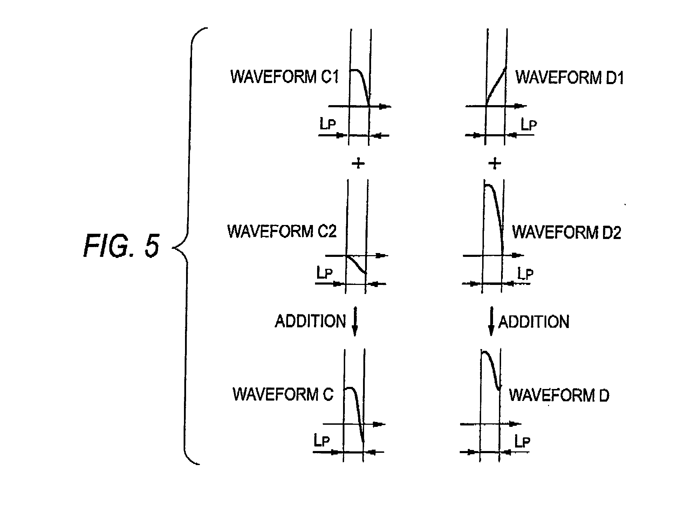

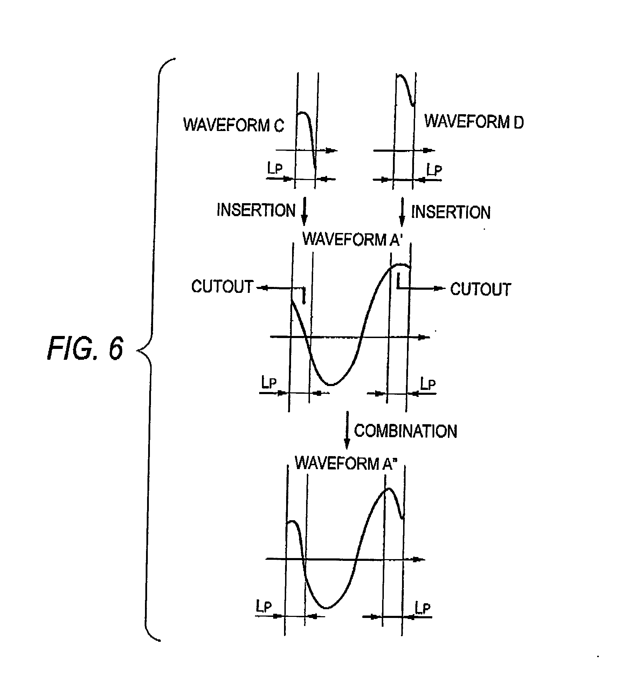

The created speech waveforms of the waveform C1 and the waveform C2 and the speech waveforms of the waveform D1 and the waveform D2 are respectively added and speech waveforms of a waveform C and a waveform D are created (Fig. 5) . Further, as shown in Fig. 6, Lp portions are cut out of the initial end and the terminal end of the speech waveform of the waveform A' and the speech waveforms of the waveform C and the waveform D are respectively inserted into the Lp portions and a speech waveform of a waveform A" is combined.

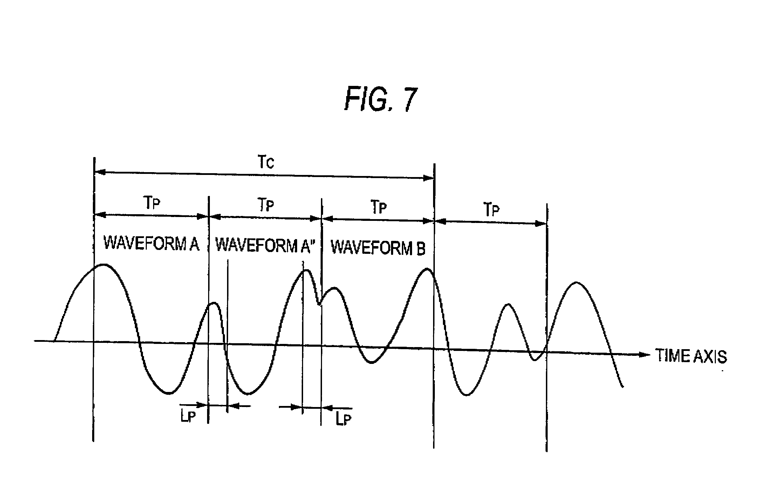

Finally, the waveform A" is inserted between the speech waveforms of the waveform A and the waveform B, and a waveform of Tc+Tp=RTp/ (R-1) satisfying the expansion coefficient R from a waveform of Tc=Tp/ (R-1) is created (Fig. 7).

By the configuration described above, horrible parasitic sound, which is generated extra and corresponds to a period every frame cutting out an input speech signal, is not generated since a speech waveform inserted is a waveform converted by time axis inversion. Also, by using a waveform multiplied by a weighting coefficient linearly changing from 0 to 1 or from 1 to 0 as waveforms of initial end and terminal end portions of the speech waveform inserted, contact is made as a waveform having smooth points of contact between the inserted waveform A" and the waveform A and the waveform B, so that a speech waveform with small distortion is obtained even in the case of performing expansion processing. Further, the speech waveform inserted can be implemented by relatively simple processing of time axis inversion.

Here, the embodiment in which expansion processing is performed by inserting the waveform A" into which the speech waveform of the waveform A is converted has been described, but it can similarly be applied to the case of converting the speech waveform of the waveform B.

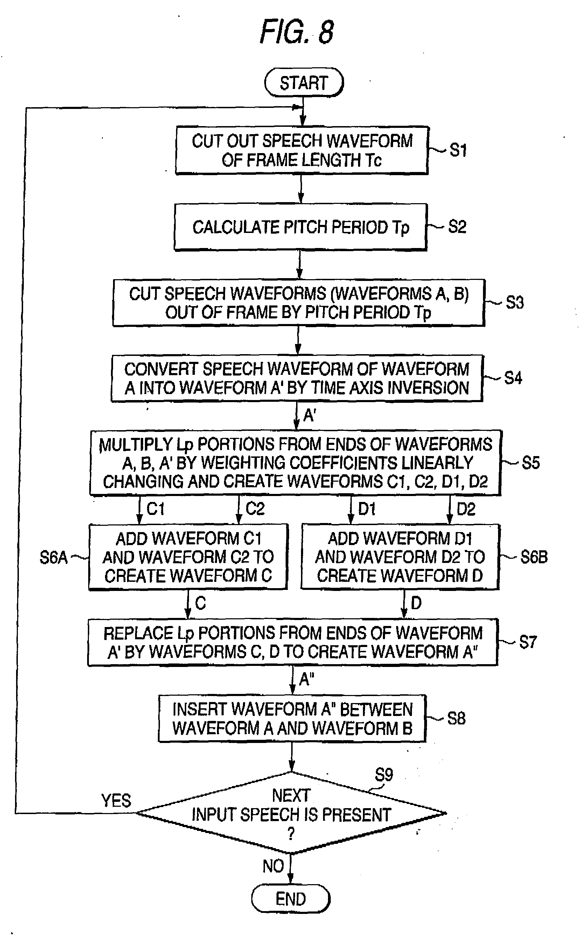

A flow of expansion processing in the embodiment of the invention will be described below using a flowchart of Fig. 8. First, a speech waveform of a predetermined frame length Tc is cut out in a speech signal inputted (S1) and from this speech waveform of the frame length Tc cut out, a pitch period Tp is obtained using an autocorrelation function etc. (S2). From this pitch period Tp obtained, two speech waveforms (waveforms A, B) of processing targets are cut out of the inputted speech signal by the pitch period Tp (S3) and thereafter, a speech waveform of the waveform A is converted into a waveform A' by time axis inversion (S4).

The waveform A from the end with the waveform B to an Lp portion is multiplied by a weighting coefficient linearly changing from 0 to 1 and a waveform D1 is created. Similarly, the waveform B from the end with the waveform A to an Lp portion is multiplied by a weighting coefficient linearly changing from 1 to 0 and a waveform C1 is created. Further, portions from the initial end and the terminal end of the waveform A' to Lp portions are multiplied by weighting coefficients linearly changing from 0 to 1 and from 1 to 0, respectively and speech waveforms of a waveform C2 and a waveform D2 are created (S5) .

Speech waveforms of the waveform C1 and the waveform C2 are added and a speech waveform of a waveform C is created (S6A) . Similarly, speech waveforms of the waveform D1 and the waveform D2 are added and a speech waveform of a waveform D is created (S6B).

Then, by cutting out speech waveforms from an initial point and a terminal point of the waveform A' to Lp portions and respectively inserting the speech waveforms of the waveform C and the waveform D into the portions cut out, a waveform A" is combined (S7) . Further, a speech waveform of this waveform A" is inserted between the waveform A and the waveform B (S8) and a speech waveform is expanded. When the steps of S1 to S8 are repeatedly performed with respect to the next frame and an input speech signal to be expanded is not inputted, this expansion processing is ended (S9).

Here, the expansion processing implemented in the speech rate conversion apparatus configured in Fig. 1 has been described, but the expansion processing comprising the steps of S1 to S8 described above can also be implemented by software executed by a computer equipped with a processor such as a CPU other than the expansion processing part 3 as shown in Fig. 1. A weighting coefficient multiplied to cutout waveform is not limited to a linearly changing type. Numerous modifications and other embodiments are within the scope of one of ordinary skill in the art, such as a sound output unit incorporated in a television set, a DVD player, or the like.

As described above, according to the invention, speech rate conversion with good sound quality without generating horrible parasitic sound can be implemented by relatively simple processing.

**Claims**

1. A speech rate conversion apparatus comprising:

   a pitch period calculation unit configured to calculate a pitch period from a speech signal inputted; and
   an expansion processing unit configured to perform expansion processing by cutting a speech waveform out of the speech signal by the pitch period and inserting an inverted waveform into the speech signal,

   wherein the inverted waveform is obtained by time-reversing the speech waveform.

2. A speech rate conversion apparatus comprising:

   a speech frame extraction unit configured to extract a speech frame of a predetermined frame length from a speech signal inputted;
   a pitch period calculation unit configured to calculate a pitch period from the speech frame; and
   an expansion processing unit configured to perform expansion processing by cutting a speech waveform out of the speech frame by the pitch period and inserting an inverted waveform into the speech frame,

   wherein the inverted waveform is obtained by time-inverting the speech waveform.

3. The speech rate conversion apparatus as claimed in claim 1,
   wherein the expansion processing unit performs expansion processing by continuously cutting out plural speech waveforms by the pitch period and inserting at least one or more of the inverted waveforms.

4. The speech rate conversion apparatus as claimed in claim 2,
   wherein the expansion processing unit performs expansion processing by continuously cutting out plural speech waveforms by the pitch period and inserting at least one or more of the inverted waveforms.

5. The speech rate conversion apparatus as claimed in claim 1,
   wherein the expansion processing unit performs expansion processing by inserting the inverted waveform between a speech waveform cut out before the inversion and a next speech waveform cut out.

6. The speech rate conversion apparatus as claimed in claim 2,

wherein the expansion processing unit performs expansion processing by inserting the inverted waveform between a speech waveform cut out before the inversion and a next speech waveform cut out.

7. The speech rate conversion apparatus as claimed in claim 5,

wherein the inverted waveform is obtained by weighting an initial end portion of a waveform cut out and time-reversed, and by adding and combining the portion with a terminal end portion of the speech waveform cut out before the inversion.

8. The speech rate conversion apparatus as claimed in claim 6,

wherein the inverted waveform is obtained by weighting an initial end portion of a waveform cut out and time-reversed, and by adding and combining the portion with a terminal end portion of the speech waveform cut out before the inversion.

9. The speech rate conversion apparatus as claimed in claim 5,

wherein the inverted waveform is obtained by weighting a terminal end portion of a waveform cut out and time-reversed, and by adding and combining the portion with an initial end portion of the next speech waveform cut out.

10. The speech rate conversion apparatus as claimed in claim 6,

wherein the inverted waveform is obtained by weighting a terminal end portion of a waveform cut out and time-reversed, and by adding and combining the portion with an initial end portion of the next speech waveform cut out.

11. A speech rate conversion method comprising:

calculating a pitch period from a speech signal inputted; and
performing expansion processing by cutting a speech waveform out of the speech signal by the pitch period and inserting an inverted waveform into the speech signal,

wherein the inverted waveform is obtained by time-reversing the speech waveform.

12. The speech rate conversion method as claimed in claim 11,

wherein expansion processing is performed by continuously cutting out plural speech waveforms by the pitch period and inserting at least one or more of the inverted waveforms.

13. The speech rate conversion method as claimed in claim 11,

wherein expansion processing is performed by inserting the inverted waveform between a speech waveform cut out before the inversion and a next speech waveform cut out.

14. The speech rate conversion method as claimed in claim 13,

wherein the inverted waveform is obtained by weighting an initial end portion of a waveform cut out and time-reversed, and by adding and combining the portion with a terminal end portion of the speech waveform cut out before the inversion.

15. The speech rate conversion method as claimed in claim 13,

wherein the inverted waveform is obtained by weighting a terminal end portion of a waveform cut out and time-reversed, and by adding and combining the portion with an initial end portion of the next speech waveform cut out.

16. A speech rate conversion program for causing a computer to execute the steps comprising:

calculating a pitch period from a speech signal inputted; and
performing expansion processing by cutting a speech waveform out of the speech signal by the pitch period and inserting an inverted waveform into the speech signal,

wherein the inverted waveform is obtained by time-inverting the speech waveform.

## FIG. 1

INPUT SPEECH
SIGNAL

1

| SPEECH WAVEFORM
FRAME EXTRACTION PART |

Tc

2

| PITCH PERIOD
CALCULATING PART |

PITCH PERIOD Tp

3

100

| TIME AXIS
EXPANSION PART |

## FIG. 2

Tc

Tp    Tp

WAVEFORM A    WAVEFORM B

TIME AXIS

CUTOUT    CUTOUT

WAVEFORM A    WAVEFORM B

Tp    Tp

## FIG. 3

TP

WAVEFORM A

TIME AXIS
INVERSION

WAVEFORM A'

TP

## FIG. 4

WAVEFORM A          WAVEFORM B          WAVEFORM A'

LP                  LP          TP              LP          LP

WEIGHTING ↓         ↓ WEIGHTING         WEIGHTING ↓         ↓ WEIGHTING

WAVEFORM D1         WAVEFORM C1

WAVEFORM C2         WAVEFORM D2

LP                  LP                  LP          LP

EP 1 482 483 A2

FIG. 5

WAVEFORM C1    WAVEFORM D1

LP    LP

+    +

WAVEFORM C2    WAVEFORM D2

LP    LP

ADDITION    ADDITION

WAVEFORM C    WAVEFORM D

LP    LP

FIG. 6

FIG. 7

EP 1 482 483 A2

## FIG. 8

```
                        ( START )
                            │
                            ▼
              ┌─────────────────────────────┐
              │  CUT OUT SPEECH WAVEFORM     │─── S1
              │  OF FRAME LENGTH Tc          │
              └─────────────────────────────┘
                            │
                            ▼
              ┌─────────────────────────────┐
              │  CALCULATE PITCH PERIOD Tp   │─── S2
              └─────────────────────────────┘
                            │
                            ▼
           ┌───────────────────────────────────┐
           │ CUT SPEECH WAVEFORMS (WAVEFORMS A, B) │─── S3
           │ OUT OF FRAME BY PITCH PERIOD Tp    │
           └───────────────────────────────────┘
                            │
                            ▼
           ┌───────────────────────────────────┐
           │ CONVERT SPEECH WAVEFORM OF WAVEFORM │─── S4
           │ A INTO WAVEFORM A' BY TIME AXIS INVERSION │
           └───────────────────────────────────┘
                            │ A'
                            ▼
        ┌──────────────────────────────────────────┐
        │ MULTIPLY Lp PORTIONS FROM ENDS OF WAVEFORMS │
        │ A, B, A' BY WEIGHTING COEFFICIENTS LINEARLY │─── S5
        │ CHANGING AND CREATE WAVEFORMS C1, C2, D1, D2 │
        └──────────────────────────────────────────┘
            │ C1      │ C2          │ D1      │ D2
            ▼         ▼             ▼         ▼
     ┌──────────────────────┐  ┌──────────────────────┐
     │ ADD WAVEFORM C1      │  │ ADD WAVEFORM D1      │
 S6A─│ AND WAVEFORM C2 TO   │  │ AND WAVEFORM D2 TO   │─── S6B
     │ CREATE WAVEFORM C    │  │ CREATE WAVEFORM D    │
     └──────────────────────┘  └──────────────────────┘
            │ C                      │ D
            ▼                        ▼
     ┌──────────────────────────────────────────┐
     │ REPLACE Lp PORTIONS FROM ENDS OF WAVEFORM │─── S7
     │ A' BY WAVEFORMS C, D TO CREATE WAVEFORM A" │
     └──────────────────────────────────────────┘
                       │ A"
                       ▼
            ┌──────────────────────────────┐
            │ INSERT WAVEFORM A" BETWEEN    │─── S8
            │ WAVEFORM A AND WAVEFORM B     │
            └──────────────────────────────┘
                       │
                       ▼
          YES       ╱─────────────────╲   S9
         ◄─────────┤     NEXT          ├
                    ╲ INPUT SPEECH IS PRESENT ╱
                    ╲        ?        ╱
                       ╲───────────╱
                          │ NO
                          ▼
                       ( END )
```